# EUROPÄISCHE PATENTSCHRIFT

(11) **EP 1 451 518 B1**
(45) Veröffentlichungstag und Bekanntmachung des Hinweises auf die Patenterteilung: **06.04.2005**
(21) Anmeldenummer: 02799724.6
(22) Anmeldetag: 22.11.2002
(51) Int. Cl.: F41H 5/04, C04B 35/80, C04B 35/573, F16D 69/02

(54) **Faserverstärkter Verbundkörper für Schutzpanzerung, seine Herstellung und Verwendungen**
FIBER-REINFORCED COMPOSITE BODY FOR PROTECTIVE ARMORINGS, ITS PRODUCTION AND USE THEREOF
CORPS COMPOSITE RENFORCE PAR FIBRES POUR BLINDAGES DE PROTECTION, SA PRODUCTION ET SES UTILISATIONS

(30) Priorität: 23.11.2001 DE 10157487
(43) Veröffentlichungstag der Anmeldung: 01.09.2004
(73) Patentinhaber: SGL CARBON AG, 65203 Wiesbaden (DE)
(72) Erfinder: BENITSCH, Bodo, 86647 Buttenwiesen (DE); HEINE, Michael, 86695 Allmannshofen (DE); SCHWEIZER, Sven, 86150 Augsburg (DE); ZIMMERMANN-CHOPIN, Rainer, 89191 Nellingen (DE)
(74) Vertreter: Wiedemann, Markus, Dr.
(86) Internationale Anmeldenummer: PCT/EP2002/013122
(87) Internationale Veröffentlichungsnummer: WO 2003/043951

(56) Entgegenhaltungen:
- EP-A- 0 518 589
- EP-A- 0 994 084
- EP-A- 1 084 997
- DE-A- 19 805 868

## Beschreibung

Diese Erfindung betrifft Schutzpanzerungen, die für zivile und militärische Einsatzgebiete geeignet sind. Insbesondere betrifft diese Erfindung einen Körper aus Verbundwerkstoffen mit einer überwiegend Siliciumcarbid, Silicium und Kohlenstoff und/oder deren Verbindungen beinhaltenden Matrix, die durch eine Silicierung kohlenstoffhaltigen Materials gebildet wird, mit einer ersten keramischen Zone, die überwiegend aus den Komponenten der gemeinsamen Matrix besteht, einer zweiten Zone, die hinter der ersten Zone angeordnet ist und aus einer kurzfaserverstärkten C/SiC-Keramik gebildet ist, wobei die Faserlänge in der zweiten Zone in Richtung der Grenzfläche zur ersten Zone hin graduell abnimmt, und gegebenenfalls aus einer oder mehreren weiteren mit Langfasern verstärkten Zonen, die auf der hinteren Seite der zweiten Zone angeordnet sind, ein Verfahren zu dessen Herstellung und besonders günstige Verwendungen dieses Verbundkörpers.

Im zivilen Bereich, der sich u.a. auf den Personenschutz, gepanzerte Limousinen und Schutzwesten konzentriert, werden komplex geformte Teile verlangt. Dies ist insbesondere gekoppelt mit der Forderung nach einer möglichst geringen Bauteildicke, beziehungsweise Einbautiefe und geringem Gewicht. Die Anforderungen zum Schutz gegen schwere Waffen bzw. mittlere und große Kaliber sind im zivilen Bereich eher gering. Die Distanz zur Bedrohung ist allerdings meist nur recht kurz und kann bei wenigen Metern liegen. Hierdurch ergibt sich das Problem, dass es beim häufig auftretenden Mehrfachbeschuss zu nahe beieinander liegenden Treffern führt. Daraus ergeben sich höchste Anforderungen an die Multihit-Tauglichkeit der Schutzpanzerung.

Zur Panzerung im militärischen Bereich werden heute häufig flache Platten als Zusatzpanzerung für Land- und Wasserfahrzeuge sowie für Helikopter, Container, Behälter und Unterstände bzw. Feldbefestigungen eingesetzt. Die Auslegung dieser Panzerungen geht von einer Bedrohung durch Hochgeschwindigkeits- und großkalibrige Geschosse aus. Die großen Distanzen zu den Zielobjekten bedingen allerdings im allgemeinen große Trefferabstände. Daher werden hier geringere Anforderungen an die Multihit-Tauglichkeit gestellt als im zivilen Bereich.

Eine Panzerstahlplatte wird beispielsweise so behandelt, dass die der Bedrohung zugewandte Seite extrem hart und damit geschossbrechend wird. Die andere Seite wird möglichst wenig gehärtet, um die Energie des Geschosses aufzufangen. Hieraus ergibt sich auch der für Panzerplatten aus anderen Materialien typische Aufbau.

Der prinzipielle Aufbau einer Panzerung mit keramischen Werkstoffen besteht vorzugsweise aus mindestens zwei Schichten oder Zonen. Die Keramikplatte, die die Frontplatte darstellt, hat die Aufgabe, das Geschoss zu deformieren und insbesondere bei AP-Munition, den Hartkern zu brechen. Eine hinter der Keramikplatte angebrachte, verformbare Armierung, das Backing, hat die Aufgabe das Geschoss, Geschosstrümmer und Keramiksplitter aufzufangen und die restliche Keramikplatte zu stabilisieren. Das Backing besteht im allgemeinen aus hochdehnbaren und reißfesten Geweben (Aramidfasergewebe, HDPE-Gewebe, etc.) oder Metall, oder Kunststoffen. Weitere Schichten aus Gewebe oder Metallplatten können vor, zwischen und hinter diesen zwei Hauptkomponenten angebracht werden.

In US 5,114,772 wird ein zweilagiger Verbundkörper vorgestellt. Die erste Lage besteht aus Sinterkeramik, die in Form einzelner Stücke oder Segmente angeordnet ist. Die darunter angeordnete Lage besteht aus einem faserverstärkten porösen Verbundwerkstoff, dessen Matrix mittels Gasphaseninfiltration oder Precursor-Infiltration gebildet wird. Die Verbindung der beiden Lagen erfolgt typischerweise durch eine Verklebung. Ebenso ist es auch möglich, die Sinterkeramik in die Oberfläche des Körpers aus Verstärkungsfasern, der die untere Lage bildet, einzubringen, bevor dieser mit einer keramischen Matrix nachverdichtet wird.
Nachteilig beim vorgestellten Verfahren der Gasphaseninfiltration sind die hohen Prozesszeiten und die immer verbleibende Restporosität der Verbundkeramik. Ähnliches gilt auch für die Precursor-Infiltration, bei der zusätzlich noch die Notwendigkeit zur Durchführung mehrerer Infiltrations/Keramisierungszyklen hinzukommt.
Da die monolithische Keramik beim Beschuss ein typisches Sprödbruchverhalten zeigt, bersten Keramikplatten unter Bildung vieler grober bis feinster Splitter. Die Verwendung der Keramikplatten ohne zusätzliches Backing ist aufgrund des Splitterabgangs beim Beschuss nicht sinnvoll. Ebenso tritt durch den Beschuss im allgemeinen eine völlige Zerstörung der jeweiligen Keramikplatten auf. Ein Mehrfachbeschuss kann hierdurch nicht mehr gehalten werden. Die geforderte Multihit-Tauglichkeit ist somit nicht gegeben und kann gegebenenfalls nur durch eine aufwendig umzusetzende Segmentierung von einzelnen monolithischen Keramikplatten realisiert werden.

Um dieses katastrophale Werkstoffverhalten der Keramik zu reduzieren, wird in EP 0 994 084 A1 die Verwendung von faserverstärktem SiC oder C/SiC (mit Kohlenstofffasern verstärktes SiC) vorgeschlagen. Der Formkörper besteht aus einem Gewebe, Gewirke, Gestricke oder dergleichen aus Kohlenstofffasern, das in einem Silicierungsvorgang durch Infiltrieren mit flüssigem Silicium zu kohlenstofffaserverstärktem Siliciumcarbid umgewandelt wird. Die geschosszugewandte Seite soll härter sein als die der Backing-Struktur zugewandte, was durch eine Variation der Art der Faserverstärkung bzw. durch die Menge der eingebrachten Fasern in den Formkörper erreicht werden soll. In einem weiteren Verfahren zur Herstellung von C/SiC, DE 199 53 259 A1, werden statt der bei EP 0 994 084 A1 beschriebenen Langfasern beschichtete Kurzfasern verwendet. Dieses Material zeichnet sich durch eine gute Multihit-Tauglichkeit aus.
Nachteilig an den vorgestellten Verfahren ist, dass hierdurch nur Verbundkörper hergestellt werden können, deren Härte diejenige der monolithischen Keramik auf der geschosszugewandten Seite nicht erreichen kann. Die geschossbrechende Wirkung der vorgestellten Schutzpanzerung nimmt dadurch ab.

Aus der WO 98/51988 A1 ist ein Verbundkörper als Schutzpanzerung bekannt, der einen mehrschichtigen Aufbau aufweist. Der Verbundkörper umfasst zumindest eine harte Schicht und zumindest eine bruchzähere oder duktilere Schicht, die abwechselnd übereinander angeordnet sind. Die harte Schicht umfasst ein keramisches Material, das darin dispergiert Fasern und gegebenenfalls Füllstoffmaterialien aufweist. Durch die Art, Form und den Gehalt der Fasern ist die Härte bzw. Duktilität dieser Schicht einstellbar. Die weichere Schicht wird zum Beispiel aus Kohlenstofffasern gebildet, wobei die Zunahme der Duktilität durch eine höhere Menge der Fasern erzielt wird. Bevorzugt werden mehrere harte und duktile Schichten innerhalb des Verbundkörper vorgesehen, um die kinetische Energie, die durch den Beschuss frei wird, aufzufangen.

Ein weiteres Verfahren zur Herstellung von C/SiC-Körpern mit einer Schichtung von Material unterschiedlicher Eigenschaften, das zur Herstellung von keramischen Bremsscheiben eingesetzt werden soll, wird in der DE 198 05 868 A1 beschrieben. Hier werden verschiedene Pressmassen in einem einzigen Pressvorgang zu einem Formkörper verpresst, der abschließend mindestens zwei ineinander übergehende Schichten eines CMC-Verbundwerkstoffs, insbesondere aus C/SiC aufweist, wobei die Fasern in den beiden Schichten verschiedene Schutzbeschichtungen, Faserlängen, oder Mengenanteile aufweisen. Insbesondere besteht die Technologie der beschriebenen Formkörper darin, dass die äußere Schicht, die Reibschicht einer Bremsscheibe, überwiegend oder vollständig aus Siliziumcarbid besteht, da die Fasern der Reibschicht beim Silicierungsprozess überwiegend oder sogar vollständig aufgezehrt werden.

Die bekannten Verbundwerkstoffe weisen jedoch bezogen auf die gewünschte Dicke bzw. das Flächengewicht keine genügend hohe geschossbrechende Wirkung auf.

Der Erfindung lag daher die Aufgabe zu Grunde, einen keramischen Verbundkörper bereitzustellen, der bei geringem Flächengewicht zum einen eine hohe geschossbrechende Wirkung und zum anderen eine Multihit-Tauglichkeit aufweist. Die Herstellung des Verbundkörpers soll in einem einfachen und kostengünstigen Verfahren erfolgen, wobei gegebenenfalls unterschiedliche Werkstoffzonen oder - schichten in einem einzigen Prozessschritt unlösbar miteinander verbunden werden sollen. Bei der Herstellung und Verwendung aufgrund unterschiedlicher thermischer Ausdehnungskoeffizienten der Zonen auftretende Verspannungen sollen vermieden werden. Beispielsweise liegt der typische Ausdehnungskoeffizient keramischer Hartstoffe aus SiC, SiSiC, oder C/SiC (mit hohem SiC-Gehalt) im Bereich von ca. 2,5 bis 5·10⁻⁶ K⁻¹, wogegen der typische Ausdehnungskoeffizient von kurzfaserverstärktem C/SiC im Bereich von ca. 0,5 bis 3 · 10⁻⁶ K⁻¹ liegt. Mit diesem Verfahren muss es auch möglich sein, komplexe Strukturen herzustellen.

Erfindungsgemäß wird die Aufgabe dadurch gelöst, dass ein mehrzoniger, zumindest teilweise faserverstärkter Verbundkörper mit mindestens zwei Zonen bereitgestellt wird. Die erste Zone, die die geschossbrechende Zone darstellt, ist aus einer monolithischen Keramik gebildet, die überwiegend Siliciumcarbid und gegebenenfalls Silicium und/oder Kohlenstoff und/oder deren Verbindungen beinhaltet. Die zweite Zone ist auf der Seite der ersten Zone angeordnet, die der geschossbrechenden Oberfläche gegenüber liegt, und ist aus einer kurzfaserverstärkten C/SiC-Keramik gebildet, wobei die Faserlänge von der Außenseite der faserverstärkten Keramikzone in Richtung zu der ersten Zone graduell abnimmt. Bevorzugte Merkmale sind Gegenstand der Unteransprüche.

Weiterhin wird erfindungsgemäß ein Verfahren zur Herstellung eines solchen Verbundkörpers angegeben, wobei das wesentliche Merkmal darin besteht, dass die kohlenstoffhaltigen Vorkörper der ersten und der zweiten Zone durch eine Flüssigsilicierung zur wunschgemäßen Zusammensetzung umgesetzt und durch die Ausbildung einer gemeinsamen Matrixphase unlösbar miteinander verbunden werden.

Durch das gemeinsame Silicieren der jeweils verwendeten Zonen oder Schichten wird ein Verbundkörper erhalten, der zumindest zwei Zonen mit unterschiedlichen mechanischen und thermophysikalischen Eigenschaften aufweist. Als dritte Zone kann auf die zweite Zone eine Schicht zum Beispiel aus einem langfaserverstärkten Material aufgebracht sein. Die Funktion einer solchen dritten Zone besteht insbesondere darin, dass Splitter aufgefangen werden, die aus der ersten und gegebenenfalls der zweiten Zone entstehen.

Ein derartiger Verbundkörper wird insbesondere bevorzugt als Schutzpanzerung zum Beispiel im Fahrzeugbereich aber auch als Schutzweste eingesetzt. Die essentiellen Schichten sind die erste geschossbrechende Schicht und die zweite multihit-taugliche Zone. Diese zweite Zone kann insbesondere dicht aneinander liegende Geschosse aufhalten. Diese zweite Zone ist insbesondere dadurch gekennzeichnet, dass sie nicht wie herkömmliche monolithische Keramik splittert. Durch den Gradientenaufbau, der durch die Faserlänge der Fasern innerhalb der zweiten Zone erzielt wird, ist es insbesondere möglich, ein Angleichen an den Ausdehnungskoeffizienten der angrenzenden ersten Schicht zu erzielen. Diese Angleichung ist für den Herstellungsprozess der Flüssigsilicierung von wesentlicher Bedeutung, da hier durch die Abkühlung von der Silicierungstemperatur bei unangepassten Ausdehnungskoeffizienten erhebliche innere Spannungen auftreten, die zu Rissen und Abplatzungen führen können.
Die Kurzfasern der zweiten Zone liegen bevorzugt in Form von Bündeln vor, die durch kohlenstoffhaltige Verbindungen zusammengehalten werden. Im Folgenden sind unter den Fasern immer auch Faserbündel zu verstehen.

Die aus der monolithischen Keramik bestehende erste Schicht ist insbesondere durch eine hohe Härte gekennzeichnet. Durch den erfindungsgemäßen Aufbau mit der ersten und der zweiten Zone ist es möglich, dass die erste Schicht nach dem Aufprall einer Geschosskugel nicht zersplittert, und zum Totalversagen des gesamten Verbundkörpers führt, sondern allenfalls reißt, weil die zweite Zone diese erste Schicht zusammenhält. Durch die Flüssiginfiltration mit Silicium wird es möglich, die hinsichtlich ihrer physikalischen Eigenschaften sehr unterschiedlichen Zonen hierfür ausreichend fest miteinander zu verbinden und die porösen kohlenstoffhaltigen Formkörper in unterschiedlichem Maße zu monolithischem und Matrix-SiC umzuwandeln.

Gemäß einer ganz besonders bevorzugten Ausführungsform wird der Verbundkörpers aus mehreren, teils faserverstärkten, keramischen Zonen, besonders bevorzugt aus drei Zonen aufgebaut. Es ist ebenfalls möglich, mehrere Folgen dieser zumindest zwei Zonen vorzusehen.

Durch den Aufbau aus zumindest der ersten und der zweiten Zone ergibt sich von der dem Beschuss zugewandten Seite zu der dem Beschuss abgewandten Seite ein gradueller Übergang der für das Beschussverhalten wesentlichen Werkstoffeigenschaften und des thermischen Verhaltens in der Weise, dass die Härte zugunsten einer Zunahme der Duktilität und der Bruchzähigkeit abnimmt.

Nachfolgend werden die einzelnen Zonen detailliert beschrieben.

### Erste Zone:

Die geschossbrechende Wirkung der ersten Zone wird erzeugt, indem durch die während des Verfahrens zur Erzeugung des Verbundkörpers gemeinsame Silicierung, auch Co-Silicierung genannt, eine extrem harte quasi monolithische Keramik erzeugt wird, die überwiegend Siliciumcarbid, sowie geringe Anteile an Silicium und Kohlenstoff enthält. Für diese Zone werden bevorzugt poröse kohlenstoffhaltige Vorkörper eingesetzt, die gegebenenfalls zusätzliche Füllbeziehungsweise Hartstoffe enthalten können. Solche kohlenstoffhaltige Vorkörper werden durch die später durchgeführte Flüssiginfiltration mit Silicium in Keramiken mit einem hohen SiC-Anteil umgewandelt. Der Massenanteil in dieser Zone an SiC liegt typischerweise bei mindestens 50%.

Bevorzugt sind SiC-Gehalte von mindestens 65 % und besonders bevorzugt von mindestens 75 %.

Die Dicke der keramisierten Zone (erste Zone) kann im Bereich von 1-100 mm, bevorzugt im Bereich von 1-50 mm liegen. Gemäss einer ganz besonders bevorzugten Variante liegt die Dicke im Bereich von 2-15 mm, oder insbesondere bei 3-10 mm. Es ist weiterhin bevorzugt, dass die Dicke der ersten Zone etwa 20-60 % der Dicke des faserverstärkten Verbundkörpers ausmacht.

Der für die spätere Silicierung bereitgestellte kohlenstoffhaltige Vorkörper der ersten Zone wird bevorzugt aus Ausgangsstoffen mit hohem Kohlenstoffanteil- oder -volumen gebildet, wobei Graphitmaterial und verdichteter Kohlenstofffaser-Filz vorteilhaft sind.

In einer weiteren Ausgestaltung der Erfindung wird die erste Zone mit Entspannungsfugen ausgestattet. Die Bildung von Entspannungsfugen beziehungsweise Sollbruchstellen wird erfindungsgemäß dadurch erreicht, dass der kohlenstoffhaltige Vorkörper mit einem regelmäßig oder unregelmäßig angeordneten Netz aus Furchen, Gräben oder Rissen mit einer Tiefe im Bereich von mindestens 20-95 %, bevorzugt 20-99 % und ganz besonders bevorzugt 20-100 % der Dicke der Vorkörpers und einer Breite von weniger als etwa 1 mm durchzogen wird. Dies kann auf übliche Weise zum Beispiel durch Prägen, Stanzen oder Fräsen erfolgen, besonders bevorzugt vor der Silicierung.

Für die Bildung des kohlenstoffhaltigen Vorkörpers ist es möglich, Kohlenstofffasergewebe, Gewirke, Gestricke oder Gelege zu verwenden, die durch die später erfolgende Silicierung möglichst vollständig zu SiC umgewandelt werden. Der Kohlenstoffgehalt von Filz, Kohlenstofffasergewebe, -gewirke, -gestricke und -gelege kann durch eine Flüssigimprägnierung mit einem pyrolysierbaren, organischen Material hoher pyrolytischer Kohlenstoffausbeute, insbesondere Pech und Phenolharz angereichert werden, wobei die Pyrolyse der organischen Materials vor oder nach dem Zusammenfügen der mindestens zwei Zonen aus den Vorkörpern erfolgen kann.

Der Siliciumcarbidgehalt kann durch eine Nachimprägnierung der vorsilicierten und teilweise porösen, integral geformten Kohlenstoffkörper mittels Siliciumcarbid bildender Vorläufer und deren Pyrolyse gesteigert werden.

Die Reaktivität des kohlenstoffhaltigen Vorkörpers wird so eingestellt, dass sich hieraus nach der Silicierung ein hoher Siliciumcarbidgehalt des keramisierten Körpers ergibt, wobei der Massenanteil an Siliciumcarbid bevorzugt wenigstens 50 %, insbesondere bevorzugt wenigstens 65 % und ganz besonders bevorzugt wenigstens 75 %, bezogen auf die Gesamtmasse des Materials der ersten Zone, ausmacht.

Gemäß einer weiter bevorzugten Ausgestaltung dieser Erfindung kann der kohlenstoffhaltige, poröse Vorkörper für die erste Zone Hartstoffe aus den Elementverbindungen von N, B, Al, C, Si, Ti, Zr, W, insbesondere TiC, TiSₓ, TiBₓ, TiC, WC, B₄C, SiC, BN, Si₃N₄ und SiCBN-Keramiken enthalten. Besonders bevorzugt werden Stoffe auf Basis von Boriden, Carbiden, Siliciden und Nitriden der genannten Metalle oder Mischungen daraus eingesetzt. Solche Füll- beziehungsweise Hartstoffe werden während der Silicierung in der überwiegend Siliciumcarbid, Silicium und Kohlenstoff, und/oder deren Verbindungen enthaltenden Matrix fest gebunden. Der Begriff Matrix wird im folgenden auch dann sinngemäß verwendet, wenn als Hartstoff nur SiC auftritt.

Ebenso ist es möglich, zu dieser Zone Metallpulver zu geben, das sich bei einer Hochtemperaturbehandlung zu Carbiden, Siliciden oder Boriden umsetzt. Dazu zählen insbesondere Bor, Silicium und Titan. Damit der resultierende faserverstärkte Verbundkörper ein geringes spezifisches Gewicht aufweist, insbesondere, wenn es als Schutzweste verwendet wird, ist es vorteilhaft, wenn solche Hartstoffe bzw. Metalle und die hieraus resultierenden Verbindungen ein geringes spezifisches Gewicht und gleichzeitig eine hohe Härte aufweisen.

Der Massenanteil aller oben angegebenen Füllstoffe beziehungsweise Metalle beträgt bevorzugt 20-50 % und ganz besonders bevorzugt 20-30 %, bezogen auf die Masse der Ausgangsmischung (vor der Silicierung) für die erste Zone.

### Zweite Zone:

Die in dem erfindungsgemäßen Verbundkörper angestrebte Multihit-Tauglichkeit wird dadurch erzielt, dass die zweite Zone aus einer kurzfaserverstärkten Keramik gebildet wird, deren Matrix überwiegend aus Siliciumcarbid, Silicium und Kohlenstoff besteht, wobei diese Zone dadurch gekennzeichnet ist, dass sie einen graduellen Übergang der Werkstoffeigenschaft von hart und spröde, wie sie der ersten Zone entsprechen, auf bruchzäh oder duktil ermöglicht. Wie bereits eingangs gesagt, wird dieser graduelle Übergang durch einen Gradientenaufbau im Hinblick auf die Faserlänge in der faserverstärkten Keramik erzielt, wobei die Faserlänge in Richtung auf die Grenzfläche mit der ersten Zone abnimmt.

Ein gattungsgemäßes Verfahren zur Herstellung von kurzfaserverstärkten C/SiC-Keramiken ist beispielsweise aus der Anmeldung DE-A 197 10 105 bekannt.
In DE-A 198 56 597 bzw. EP-A 0 994 084 wird geschildert, dass sich die Bruchzähigkeit durch die Art der Faserverstärkung und durch eine Variation des Fasergehaltes beeinflussen lässt.
Im Gegensatz zu dem aufgeführten Stand der Technik wird in der Erfindung als geschossbrechende Deckschicht eine quasi monolithische Keramik verwendet und diese mit einer faserverstärkten Keramik verbunden, wobei bei der zweiten Zone der Gradientenaufbau über die Variation der Faserlänge erfolgt.
Überraschenderweise werden die maßgeblichen thermophysikalischen und mechanischen Eigenschaften in der Übergangszone zwischen der ersten und der zweiten Schicht durch die Faserlängenverteilung bestimmt.

Erfindungsgemäß werden in der zweiten Zone bevorzugt Fasern und Faserbündel eingesetzt, die durch eine ein- oder mehrlagige kohlenstoffhaltige Beschichtung, hervorgegangen aus der Pyrolyse und/oder Graphitierung von Harz- oder Pechimprägnierungen, gegenüber der Silicierung geschützt worden sind. Unter kohlenstoffhaltigen Beschichtungen sind auch Carbide zu verstehen, da diese ebenso als Schutzschicht vor der Silicierung geeignet sind.

Erfindungsgemäß wird die Faserlänge innerhalb der zweiten Zone in der Weise graduell so verändert, dass sie von der Seite des Beschusses her, also von der ersten Zone zur anderen Zonenoberfläche hin zunimmt. Hierbei sind die mittleren Faserlängen gemeint. Typischerweise liegt die Faserlänge auf der einen Seite (der Zone 1 zugewandt) bei höchstens ca. 0,01 mm und nimmt kontinuierlich oder in Stufen bis zur anderen Seite auf bis zu 50 mm zu. Bevorzugt sind die Fasern in Fraktionen aufgeteilt, deren mittlere Länge im Bereich von 0,01 bis 50 mm, bevorzugt von 0,01 bis 20 mm und besonders bevorzugt von 0,1 bis 10 mm liegt. Der Faserlängengradient als Quotient zwischen längster und kürzester Faserlänge kann dabei gleichmäßig oder in Stufen verlaufen und liegt typischerweise bei 5 bis 2000, bevorzugt bei über 5 und besonders bevorzugt bei über 10. Liegen Faserbündel vor, so ist der Gradient der Faserlänge typischerweise mit einem Gradienten der Faserbündeldicke gekoppelt, wobei die Faserbündeldicke von der der ersten Zone zugewandten Seite zu der abgewandten Seite zunimmt. Die mittlere Faserbündeldicke (bei runden Bündeln der Durchmesser) liegt typischerweise auf der einen Seite bei mindestens ca. 8 *µ*m, oder einem Monofilamentdurchmesser, und auf der anderen Seite bei maximal 3000 *µ*m. Der Quotient zwischen dickstem und dünnstem Faserbündel kann dabei gleichmäßig oder in Stufen verlaufen und liegt typischerweise bei 10 bis 630, bevorzugt bei über 20 und besonders bevorzugt bei über 30.

Erfindungsgemäß werden die präparierten Fasern oder Faserbündel mit einem pyrolysierbaren Bindemittel gemischt in eine pressfähige Mischung überführt. Zur Erhöhung des Kohlenstoffgehaltes des hieraus gefertigten porösen Kohlenstoffvorkörpers kann der pressfähigen Mischung auch Graphit- oder Kohlepulver zugegeben werden. Zur Einstellung des Kohlenstoffanteils können der pressfähigen Mischung pulverförmige keramische Materialien und/oder Keramikbildner zugegeben werden.

Die für die erste Schicht beschriebenen verwendbaren Zusatzstoffe können auch in der zweiten Zone eingesetzt werden. Üblicherweise ist der Massenanteil dieser Zusatzstoffe in der zweiten Zone niedriger als in der ersten Schicht, bevorzugt mindestens etwa 5 %, bezogen auf die Masse dieser Zone.

### Weitere Zonen

Erfindungsgemäß ist es möglich, eine weitere Zone (dritte Zone) oder mehrere weitere Schichten auf die freiliegende Oberfläche der zweiten Zone des oben beschriebenen Verbundkörpers aufzubringen. Wenn eine solche Zone aufgebracht wird, ist es besonders bevorzugt, dass eine derartige dritte Zone die höchste Duktilität unter den drei genannten Zonen aufweist. Bevorzugt wird eine solche Schicht durch eine langfaserverstärkte Verbundkeramik aufgebaut, deren Matrix im wesentlichen aus SiC, Si und C besteht.
Die Langfaserverstärkung wird durch einfach oder mehrfach beschichtete Fasern, Gewebe, Gelege oder Gestricke gebildet, deren Fasern vorzugsweise überwiegend innerhalb der Ebene senkrecht zur Beschussrichtung ausgerichtet sind. Die Beschichtung wird vorzugsweise durch eine ein- oder mehrlagige Kohlenstoffschicht, hervorgegangen aus der Pyrolyse und/oder Graphitierung von Harz- oder Pechimprägnierungen, gebildet. Üblicherweise ist die mittlere Faserlänge größer als 50 mm, bevorzugt größer als 100 mm und besonders bevorzugt größer als 200 mm.
Diese dritte Schicht wird bevorzugt mit der ersten und zweiten gemeinsam flüssigsiliciert.

Bei den für die oben diskutierten verschiedenen Zonen eingesetzten Verstärkungsfasern sind im wesentlichen alle hochtemperaturfesten oxidischen und nicht-oxidischen Fasern denkbar. Bevorzugt sind nicht-oxidische Keramikfasern auf der Basis von einem der Elemente Kohlenstoff, Silicium, Bor und/oder Stickstoff und/oder Verbindungen von mindestens zwei dieser Elemente. Diese werden im folgenden auch als "SiCBN-Keramiken" bezeichnet. Besonders bevorzugt sind oxidierte Polyacrylnitril-, Kohlenstoff- oder Graphitfasern.

Wenn der Verbundkörper aus drei Zonen aufgebaut ist, liegen die Dicken der drei Zonen jeweils bevorzugt im Bereich von 0,5 bis 100 mm, besonders bevorzugt 0,5 bis 50 mm und ganz besonders bevorzugt 0,5 bis 10 mm. Die einzelnen Zonen müssen nicht die gleiche Dicke aufweisen. So ist es beispielsweise bei der Herstellung von Schutzpanzerungen mit hoher Multihit-Tauglichkeit gewünscht, die zweite Zone und, wenn eine dritte Zone vorhanden ist, auch diese dicker auszulegen als die erste Zone. Wird aber eine hohe geschossbrechende Wirkung gefordert, wird in der Regel die erste Zone dicker ausgelegt als die zweite und gegebenenfalls die dritte Zone.

Besonders bevorzugt liegt das Dickenverhältnis der Zonen 1 zu 2 bei einem zweizonigen Aufbau im Bereich von 1:2 bis 2:1 und beim dreizonigen Aufbau im Bereich von 1:2:2 bis 2:1:1 für die Zonen 1, 2 und 3. Besonders bevorzugt liegt das Dickenverhältnis der Zone 1 zur Summe der Dicken der Zonen 2 und 3 im Bereich von 1:0,5 bis 1:10.

Es ist jedoch besonders bevorzugt, das Verhältnis der Schichtdicken von den drei Schichten jeweils bei etwa 1 einzustellen.

Nachfolgend wird die Herstellung des erfindungsgemäß beschriebenen mehrzonigen Verbundkörpers beschrieben. Grundsätzlich werden die zwei Schichten, beziehungsweise wenn eine dritte Schicht verwendet wird, diese drei Schichten so übereinander gelegt, dass die erste Schicht im resultierenden Verbundkörper oben liegt, und einem Beschuss zugewandt ist. Auf die andere, dem Beschuss abgewandte Oberfläche dieser ersten Schicht wird die zweite Schicht aufgebracht. Wenn eine dritte Schicht verwendet wird, wird diese dritte Schicht auf die freiliegende Oberfläche der zweiten Schicht aufgebracht. Nach Übereinanderlegen der zwei beziehungsweise der mehreren Schichten erfolgt eine mechanische Fixierung dieses Verbundes. Die eigentliche feste oder unlösbare Verbindung zwischen den Schichten wird durch die Infiltrations- und Silicierungsreaktion ausgebildet. Es ist im Gegensatz zum Stand der Technik somit nicht mehr erforderlich, in jedem Fall ein zusätzliches Verkleben der aneinander angrenzenden Schichten durchzuführen, so dass die Herstellung des Verbundkörpers gemäß der Erfindung deutlich einfacher und wirtschaftlicher ist, als es im Stand der Technik möglich war. Auf diese Weise ist es insbesondere möglich, das Verfahren innerhalb von kürzerer Zeit und somit auch kostengünstiger durchzuführen. Auch gekrümmte oder komplexe Geometrien können in einfacher Weise realisiert werden. Dies ist ein deutlicher wirtschaftlicher Vorteil.

In einer weiteren vorteilhaften Ausgestaltung der Erfindung wird zunächst der für eine der außenliegenden Zonen vorgesehene Vorkörper geformt und das der anderen Zone bzw. den weiteren Zonen entsprechende Material in pulvriger, granulierter oder gelegeartiger Form auf diesen Vorkörper aufgebracht. Die Verbindung des Materials erfolgt darauf durch einen Press- oder Autoklavprozess. Vorteilhafterweise enthält das den weiteren Zonen entsprechende Material in pulvriger oder granulierter Form hierfür pyrolysierbare und während des Pressvorgangs aushärtbare Bindemittel.

In einer weiteren Ausgestaltung der Erfindung können die den einzelnen Zonen oder Zonenkombinationen entsprechenden porösen kohlenstoffhaltigen Vorkörper mit einem pyrolysierbaren Kleber verklebt werden. Hierzu eignen sich organische Harze, insbesondere auf Phenolharzbasis. Vorteilhafterweise können dem Kleber der jeweiligen Zone artverwandte Zuschlagstoffe, wie Hartstoffpulver, Kohlenstoffpulver oder Fasern zugemischt werden.
Aufgrund dieser Fertigungstechnik findet der Übergang der Zusammensetzung zwischen den Zonen nicht abrupt, sondern kontinuierlich statt, wodurch eine Verbindung mit hoher mechanischer Festigkeit und insbesondere verringerter innerer Spannung erreicht werden kann.

Erfindungsgemäß wird die Infiltration des aus mindestens zwei Verkörpern aufgebauten integralen porösen Körpers so ausgeführt, dass Silicium in Form von Pulver, Schüttungen oder geformten Si-spendenden Körpern partiell oder großflächig auf mindestens eine Seite aufgebracht und im Vakuum auf eine Temperatur oberhalb des Schmelzpunktes von Silicium erhitzt wird. Bevorzugt erfolgt die Infiltration bei einer Temperatur von 1600 bis 1800 °C.

Das oben beschriebene gemeinsame Silicieren wird erfindungsgemäß auf jeden Fall zur Verbindung der ersten und der zweiten Zone miteinander durchgeführt. Es ist aber auch möglich, die dritte Zone vor dem Silicieren auf den Verbund aus der ersten und der zweiten Zone aufzubringen und die gemeinsame Silicierung mit den resultierenden drei Zonen durchzuführen. Weiterhin ist es ebenfalls möglich, eine gemeinsame Silicierung der ersten und der zweiten Zone vorzunehmen und dann durch Verwendung eines geeigneten Klebematerials die dritte Zone, oder weitere Zonen, mit dem resultierenden Verbund zu verbinden, so dass hieraus ein mindestens dreischichtiger Verbundkörper resultiert.

Der oben beschriebene Verbundkörper kann besonders als Schutzpanzerung eingesetzt werden. Grundsätzlich ist der Verbundkörper zur wesentlichen Absorption einer jeden stoßartigen punktuellen Belastung geeignet und kann daher für verschiedenste Arten in der Schutztechnik eingesetzt werden. Technisch interessant ist insbesondere die Verwendung der Verbundkörper in Form von Panzerungsplatten, beispielsweise für Kraftfahrzeuge, insbesondere Automobile. In der Automobiltechnik können Karosserieteile oder Karosserieverstärkungen mit komplexer Geometrie aus diesen Materialien hergestellt werden. Gleiches gilt auch für die Erzeugung von Panzerungen von Flugzeugen, Flugkörpern, Satelliten, oder auch Zügen. Ein besonderer Vorteil bei der Verwendung des erfindungsgemäß beschriebenen Verbundkörpers liegt darin, dass dieser zum einen leichter ist als herkömmliche Schutzpanzerungen aus Metall und dass insbesondere ein vollständiges Zersplittern des Verbundkörpers vermieden werden kann.

Selbstverständlich ist es auch möglich, Schiffe mit den beschriebenen Verbundkörpern auszurüsten, um diese gegenüber Beschuss zu schützen. Die Dicke des Verbundkörpers als ganzes kann auch dünner ausgelegt werden, wenn der Verbundkörpers beispielsweise als Splitterschutz, insbesondere als Schutz gegenüber Granatsplittern verwendet werden soll. Schließlich soll nicht unerwähnt bleiben, dass der erfindungsgemäß beschriebene Verbundkörpers auch den Schutz im zivilen Bereich umfasst, beispielsweise in Form einer Einlage für Schutzwesten oder anderweitiger Bekleidung, die am menschlichen Körper getragen wird.

Der erfindungsgemäß beschriebene Verbundkörper zeichnet sich dadurch aus, dass die Festkörperstruktur während der Energieeinwirkung sehr lange erhalten bleibt. Die einwirkende Energie wird innerhalb des Werkstoffes transformiert.

Insgesamt wird somit erfindungsgemäß ein Verbundkörper zur Verfügung gestellt, der zum einen auf einfache und kostengünstige Weise hergestellt werden kann und zum anderen eine hohe Multihit-Tauglichkeit und dennoch eine hohe geschossbrechende Wirkung aufweist.

Nachfolgend wird diese Erfindung detailliert unter Bezugnahme auf die Ausführungsbeispiele erläutert.

### Beispiel 1:

Für die Herstellung einer erfindungsgemäßen ballistischen Schutzpanzerung wird wie folgt vorgegangen:

Zunächst wird die oben beschriebene zweite Schicht des Verbundkörpers hergestellt. Hierzu wurden 4 pressfähige Mischungen aus mit Kohlenstoffmaterial beschichteten Fasern und Faserbündeln und aus einem pyrolysierbaren Bindemittel hergestellt, die sich hinsichtlich der Faserlängenverteilung unterscheiden. Es werden 4 Faserfraktionen mit einer maximalen Länge von je 0,5 mm, 1 mm, 2 mm und 4 mm eingesetzt. Die Fraktionen werden nacheinander in eine Pressform eingefüllt, zu einer Platte mit ca. 4 mm Dicke verpresst und bei einer Temperatur im Bereich von 80 bis 190 °C und für eine Dauer von 30 Minuten bis 5 Stunden. ausgehärtet, so dass sich ein Längengradient der Fasern über die Plattendicke ergibt.

Nach der thermischen Umwandlung des Bindemittels in Kohlenstoff wird auf diese Platte auf der Seite mit der kürzeren Faserlänge eine 2,3 mm dicke Schicht aus verdichtetem Graphit (erste Schicht) durch Verwendung eines Graphitpulver / Polymerharzgemisches als Klebematerial aufgebracht.

Dieser Verbund wird hierauf im Ofen bei 1450 bis 1850 °C mit flüssigem Silicium infiltriert und partiell zu SiC umgesetzt. Für die Herstellung einer dritten Schicht wird eine homogene Platte aus langfaserverstärktem CFC (mit Kohlenstofffasern verstärkter Kohlenstoff) mit einer Dicke von 3 mm, wie oben beschrieben, siliciert und erhält dadurch eine Dichte von ca. 1,7 g/cm³.

Diese Platte wird hierauf auf die Rückseite der zweiten Zone des zuvor hergestellten Verbunds durch Verwendung von Polyurethan als Klebmaterial aufgeklebt.

### Beispiel 2:

Entsprechend der Vorgehensweise von Beispiel 1 wird ein Verbund aus drei Zonen erzeugt. Die Platte, die für die erste Schicht verwendet werden soll, ist bei diesem Beispiel mit Rillen durchzogen ist, die netzförmig angeordnet sind. Die Tiefe der Rillen beträgt 2 mm und die Breite 1 mm.

### Beispiel 3:

Für eine weitere vorzugsweise Ausführung einer erfindungsgemäßen ballistischen Schutzpanzerung in Plattenform wird wie folgt vorgegangen:

Zunächst wurde, wie bei Beispiel 1 beschrieben, die zweite Schicht des Verbundkörpers hergestellt. Hierzu wurden 4 pressfähige Mischungen aus mit Kohlenstoffmaterial beschichteten Fasern und Faserbündeln und aus einem pyrolysierbaren Bindemittel hergestellt, die sich hinsichtlich der Faserlängenverteilung unterscheiden. Es werden 4 Fraktionen mit Verteilungen der Länge von unter 0,5 mm, unter 1 mm, unter 2 mm und unter 4 mm eingesetzt. Die Fraktionen werden nacheinander in eine Pressform eingefüllt, zu einer Platte mit ca. 4 mm Dicke verpresst und thermisch bei 150 °C für eine Dauer von 3 h ausgehärtet, so dass sich ein Längengradient der Fasern über die Plattendicke ergibt. Nach der thermischen Umsetzung des Bindemittels zu Kohlenstoff wird auf die Vorderseite der Platte, die die kürzere Faserlänge aufweist, eine etwa 2,3 mm dicke Schicht aus verdichtetem Graphit aufgeklebt. Auf die freiliegende Oberfläche dieser Zone wird eine dritte Schicht aus langfaserverstärktem Kohlenstoffmaterial mit einer Dicke von 3 mm aufgeklebt. Dieser gesamte Verbundkörper wird in einer Co-Silicierung, wie oben beschrieben, untrennbar miteinander verbunden, sodass eine Matrix aus SiC, Si und C gebildet wird. Die Gesamtdicke des Verbundes liegt bei etwa 10 mm.

### Beispiel 4:

In diesem Beispiel wird der Verbundkörper wie an Beispiel 3 dargelegt, hergestellt. Zusätzlich wurde jedoch in den Graphit der ersten Schicht vor dem verdichtenden Pressvorgang der Hartstoff B₄C in einem Massenanteil von 30 %, bezogen auf die Masse des als Ausgangsmaterials verwendeten Graphits, als Pulver (Partikelgröße d₅₀ < 50 *µ*m) eingebracht.

## Patentansprüche

1. Zumindest teilweise faserverstärkter Verbundkörper mit einer überwiegend Siliciumcarbid, Silicium und Kohlenstoff enthaltenden Matrix, die durch eine Silicierung kohlenstoffhaltigen Materials gebildet wird, bestehend aus einer ersten keramischen Zone, die überwiegend aus Siliciumcarbid, Silicium und Kohlenstoff gebildet wird, und einer zweiten Zone aus kurzfaserverstärkter Verbundkeramik, die auf einer der Seiten der ersten Zone angeordnet ist, **dadurch gekennzeichnet, dass** die Faserlänge oder die Faserlänge zusammen mit der Faserbündeldicke in der zweiten Zone von der der ersten Zone zugewandten Seite zu der abgewandten Seite hin graduell zunimmt.

2. Verbundkörper nach Anspruch 1,
**dadurch gekennzeichnet, dass**
er eine dritte Zone mit langfaserverstärkter Verbundkeramik mit einer überwiegend Siliciumcarbid, Silicium und Kohlenstoff und/oder deren Verbindungen enthaltenden Matrix aufweist, die auf der freiliegenden Oberfläche der zweiten Zone angeordnet ist.

3. Verbundkörper nach Anspruch 1 oder 2,
**dadurch gekennzeichnet, dass**
die Länge der Kurzfasern der zweiten Zone im Bereich zwischen 0,01 und 50 mm liegt.

4. Verbundkörper nach Anspruch 1 oder 2,
**dadurch gekennzeichnet, dass**
die Länge der Kurzfasern der zweiten Zone im Bereich zwischen 0,01 und 20 mm liegt.

5. Verbundkörper nach einem der vorangegangenen,Ansprüche,
**dadurch gekennzeichnet, dass**
der Faserlängengradient der zweiten Zone, als Quotient zwischen längster und kürzester Faserlänge, bei über 20 liegt.

6. Verbundkörper nach Anspruch 1,
**dadurch gekennzeichnet, dass**
die Faserbündeldicke der zweiten Zone im Bereich zwischen 8 µm und 3000 µm liegt.

7. Verbundkörper nach einem der vorangegangenen Ansprüche,
**dadurch gekennzeichnet, dass**
die Verstärkungsfasern der zweiten und/oder dritten Zone aus hochwarmfesten Fasern auf Basis von Kohlenstoff, Silicium, Bor, Stickstoff, Wolfram, Aluminium oder deren Verbindungen, gebildet sind.

8. Verbundkörper nach Anspruch 7,
**dadurch gekennzeichnet, dass**
die Verstärkungsfasern eine Beschichtung aus Kohlenstoff, Graphit oder Carbiden aufweisen.

9. Verbundkörper nach einem der vorangegangenen Ansprüche,
**dadurch gekennzeichnet, dass**
die zweite Zone Füllstoffe aus Siliciden, Carbiden, Boriden, Nitriden, Metallen und/oder Mischungen hieraus enthält.

10. Verbundkörper nach einem der vorangegangenen Ansprüche,
**dadurch gekennzeichnet, dass**
der Massenanteil des Füllstoffes in der zweiten Zone bis zu etwa 50 %, bezogen auf die Masse der Ausgangsmischung für die zweite Zone, ausmacht.

11. Verbundkörper nach einem der vorangegangenen,Ansprüche,
**dadurch gekennzeichnet, dass**
die erste Zone aus einer Verbundkeramik mit einem SiC-Anteil oberhalb 50 Gew.-% aufgebaut ist, welche durch eine Flüssiginfiltration von Silicium in einen kohlenstoffhaltigen Vorkörper gebildet wurde.

12. Verbundkörper nach Anspruch 11,
**dadurch gekennzeichnet, dass**
der kohlenstoffhaltige Vorkörper überwiegend aus Kohlenstofffilz, Graphit, Graphitmaterial, und/oder Kohle besteht.

13. Verbundkörper nach einem der vorangegangenen Ansprüche,
**dadurch gekennzeichnet, dass**
die erste Zone Füllstoffe aus der Guppe N, B, Al, C, Si, Ti, Zr, W, elementar oder in Verbindung, insbesondere TiC, TiSiₓ, TiBₓ, TiC, WC, B₄C, SiC, BN, Si₃N₄ und SiCBN-Keramiken in Massenanteilen von 20 bis 50 % enthält.

14. Verbundkörper nach einem der Ansprüche 1 bis 13,
**dadurch gekennzeichnet, dass**
das Verhältnis der Dicken der ersten und der zweiten Zone beziehungsweise der ersten, zweiten und dritten Zone im Bereich von 1:2 bis 2:1 beziehungsweise 1:2:2 bis 2:1:1 liegt.

15. Verbundkörper nach einem der Ansprüche 1 bis 13,
**dadurch gekennzeichnet, dass**
die Dicke sowohl der ersten wie auch der zweiten Zone im Bereich von 1 bis 100 mm liegt.

16. Verbundkörper nach Anspruch 2, **dadurch gekennzeichnet, dass**
die Langfaserverstärkung durch einfach oder mehrfach beschichtete Fasern, Gewebe, Gelege oder Gestricke gebildet ist, deren Fasern überwiegend innerhalb der Ebene senkrecht zum Schichtaufbau ausgerichtet sind.

17. Verbundkörper nach Anspruch 2 oder 16,
**dadurch gekennzeichnet, dass**
die mittlere Faserlänge der dritten Zone größer als 50 mm ist.

18. Verbundkörper nach einem der Ansprüche 1 bis 17,
**dadurch gekennzeichnet, dass**
die erste Zone Entspannungsfugen aufweist.

19. Verfahren zur Erzeugung eines faserverstärkten Verbundkörpers nach einem der Ansprüche 1 bis 18,
**gekennzeichnet durch**
Vorbereiten von porösen, kohlenstoffhaltigen Vorkörpern für die erste und die zweite Zone, Übereinanderlegen der Vorkörper der ersten und der zweiten Zone, mechanisches Fixieren des resultierenden Verbundes und anschließendes gemeinsames Infiltrieren der ersten und der zweiten Zone mit flüssigem Silicium und Durchführung der Silicierung auf übliche Weise.

20. Verfahren gemäß Anspruch 19,
**dadurch gekennzeichnet, dass**
vor dem Infiltrieren ein dritter und gegebenenfalls weitere poröse kohlenstoffhaltige Vorkörper auf den Verbund aufgebracht werden, mechanisch fixiert werden und anschließend ein gemeinsames Infiltrieren aller Zonen mit flüssigem Silicium und das Silicieren erfolgt.

21. Verfahren nach Anspruch 20,
**dadurch gekennzeichnet, dass**
ein Verbund aus der ersten und der zweiten Zone erzeugt wird, der dann mit flüssigem Silicium infiltriert und siliciert wird und dass anschließend zusätzlich ein Material für eine dritte Zone aufgebracht und mit dem Verbund verklebt wird.

22. Verfahren nach einem der Ansprüche 19 bis 21,
**dadurch gekennzeichnet, dass**
die mechanische Fixierung durch einen pyrolysierbaren Kleber bewirkt wird.

23. Verfahren nach einem der Ansprüche 19 bis 22,
**dadurch gekennzeichnet, dass**
für die Infiltrierung und Silicierung das Silicium auf zumindest eine Außenfläche des Verbundes in Form von Pulver aufgebracht und auf eine Temperatur oberhalb des Schmelzpunktes von Silicium erhitzt wird.

24. Verwendung eines faserverstärkten Verbundkörpers gemäß einem der Ansprüche 1 bis 18, zur teilweisen oder vollständigen Absorption mindestens einer stoßartigen, punktuellen Belastung.

25. Verwendung gemäß Anspruch 24 zur Panzerung.

26. Verwendung gemäß den Ansprüchen 24 oder 25 als Strukturbauteil.

27. Verwendung gemäß einem der Ansprüche 24 bis 26 zur Panzerung im Fahrzeugbau und Luftfahrzeugbau.

28. Verwendung gemäß einem der Ansprüche 24 bis 27 zur Panzerung von Panzern, Flugzeugen, Helikoptern, Schiffen, Bahnfahrzeugen, Gebäuden und Tresoren.

29. Verwendung gemäß einem der Ansprüche 24 bis 26 in Schutzwesten.

## Claims

1. An at least partially fibre-reinforced composite body with a matrix predominantly containing silicon carbide, silicon and carbon and formed by siliconizing a carbon-containing material, comprising a first ceramic zone predominantly formed of silicon carbide, silicon and carbon, and a second zone of a short-fibre-reinforced composite ceramic material arranged on one of the surfaces of said first zone, **characterized in that** the fibre length or the fibre length in conjunction with the fibre bundle thickness in the second zone gradually increases from the side facing said first zone toward the side facing away from it.

2. The composite body according to claim 1,
**characterized in that**
it has a third zone with a long-fibre-reinforced composite ceramic with a matrix predominantly containing silicon carbide, silicon and carbon and/or their compounds and arranged on the exposed surface of said second zone.

3. The composite body according to claim 1 or 2,
**characterized in that**
the length of the short fibres of said second zone is in the area of between 0.01 and 50 mm.

4. The composite body according to claim 1 or 2,
**characterized in that**
the length of the short fibres of said second zone is in the area of between 0.01 and 20 mm.

5. The composite body according to any one of the preceding claims,
**characterized in that**
the fibre length gradient of the second zone, as a quotient between the longest and the shortest fibre length, is greater than 20.

6. The composite body according to claim 1,
**characterized in that**
the fibre bundle thickness of the second zone is in the area of between 8 µm and 3000 µm.

7. The composite body according to any one of the preceding claims,
**characterized in that**
the reinforcing fibres of the second and/or third zone are formed of high-temperature-resistant fibres on the basis of carbon, silicon, boron, nitrogen, tungsten, aluminium or their compounds.

8. The composite body according to claim 7,
**characterized in that**
the reinforcing fibres have a coating of carbon, graphite or carbides.

9. The composite body according to any one of the preceding claims,
**characterized in that**
the second zone contains fillers of silicon, carbides, borides, nitrides, metals and/or mixtures thereof.

10. The composite body according to any one of the preceding claims,
**characterized in that**
the mass percentage of said filler in the second zone is up to about 50% with respect to the mass of the original mixture for the second zone.

11. The composite body according to any one of the preceding claims,
**characterized in that**
the first zone is constructed of a composite ceramic material having a SiC percentage of above 50 % by weight, which is produced by fluid infiltration of silicon in a carbon-containing preform.

12. The composite body according to claim 11,
**characterized in that**
the carbon-containing preform is predominantly of carbon felt, graphite, graphite material and/or coal.

13. The composite body according to any one of the preceding claims,
**characterized in that**
the first zone contains fillers of the group comprising N, B, Al, C, Si, Ti, Zr, W, elemental or in compounds, in particular, TiC, TiSiₓ, TiBₓ, TiC, WC, B₄C, SiC, BN, Si₃N₄ and SiCBN ceramics in mass percentages of between 20 and 50%.

14. The composite body according to any one of claims 1 to 13,
**characterized in that**
the ratio of the thicknesses of the first and second zones or the first, second and third zones is in the area of between 1:2 and 2:1, or 1:2:2 and 2:1:1, respectively.

15. The composite body according to any one of claims 1 to 13,
**characterized in that**
the thickness of both the first and the second zone is in the area of between 1 and 100 mm.

16. The composite body according to claim 2,
**characterized in that**
the long-fibre reinforcement is formed by single-layer or multi-layer coated fibres, fabrics, layings or knitted materials, wherein the fibres are predominantly aligned within the plane normal to the layer build-up.

17. The composite body according to claim 2 or 16,
**characterized in that**
the mean fibre length of the third zone is greater than 50 mm.

18. The composite body according to any one claims 1 to 17,
**characterized in that**
the first zone has stress-relieving joints.

19. A method of manufacturing a fibre-reinforced composite body according to any one of claims 1 to 18,
**characterized by**
preparing porous, carbon-containing preforms for the first and second zones,
overlaying the preforms of said first and second zones,
mechanically fixing the resulting composite and subsequently jointly infiltrating said first and second zones with liquid silicon and
carrying out the siliconization in the usual way.

20. The method according to claim 19,
**characterized in that**
before the infiltration a third and, as necessary, further porous carbon-containing preforms are deposited on the composite body and mechanically fixed, and subsequently a joint infiltration of all zones with liquid silicon and the siliconization are carried out.

21. The method according to claim 20,
**characterized in that**
a composite of said first and second zones is created and then infiltrated with liquid silicon and siliconized, and that subsequently and additionally a material for a third zone is deposited and adhesively glued to said composite.

22. The method according to any one of claims 19 to 21,
**characterized in that**
the mechanical fixing is effected by a pyrolizable adhesive.

23. The method according to any one of claims 19 to 22,
**characterized in that**
for infiltrating and siliconizing, the silicon is deposited on at least one external surface of said composite in the form of a powder and then heated to a temperature above the melting point of silicon.

24. Use of a fibre-reinforced composite body according to any one of claims 1 to 18, for partially or completely absorbing at least one impulsive, point-focussed stress.

25. The use according to claim 24 for armour.

26. The use according to any one of claims 24 or 25 as a structural component.

27. The use according to any one of claims 24 to 26 for armour in the vehicle manufacture and aerospace industries.

28. The use according to any one of claims 24 to 27 for armouring tanks, aeroplanes, helicopters, ships, railroad vehicles, buildings and safes.

29. The use according to any one of claims 24 to 26 in protective jackets.

## Revendications

1. Corps composite au moins partiellement renforcé par des fibres avec une matrice contenant de manière prépondérante du carbure de silicium, du silicium et du carbone, matrice qui est formée par un enrichissement en silicium du matériau contenant du carbone, constitué par une première zone céramique qui est formée de manière prépondérante par du carbure de silicium, du silicium et du carbone et par une seconde zone de céramique composite renforcée par des fibres courtes qui est placée sur l'un des côtés de la première zone, **caractérisé en ce que** la longueur des fibres ou la longueur des fibres ensemble avec l'épaisseur du faisceau de fibres dans la seconde zone augmente graduellement du côté tourné vers la première zone au côté détourné.

2. Corps composite selon la revendication 1,
**caractérisé en ce qu'**il présente une troisième zone avec de la céramique composite renforcée par des fibres longues avec une matrice qui contient de manière prépondérante du carbure de silicium, du silicium et du carbone et/ou leurs combinaisons, matrice qui est placée sur la surface à découvert de la seconde zone.

3. Corps composite selon la revendication 1 ou 2,
**caractérisé en ce que** la longueur des fibres courtes de la seconde zone est de l'ordre entre 0,01 et 50 mm.

4. Corps composite selon la revendication 1 ou 2,
**caractérisé en ce que** la longueur des fibres courtes de la seconde zone est de l'ordre entre 0,01 et 20 mm.

5. Corps composite selon l'une des revendications précédentes, **caractérisé en ce que** le gradient de longueur des fibres de la seconde zone, en tant que quotient entre la longueur de fibre la plus longue et la longueur de fibre la plus courte, se situe au-dessus de 20.

6. Corps composite selon la revendication 1, **caractérisé en ce que** l'épaisseur du faisceau de fibres de la seconde zone est de l'ordre entre 8 µm et 3000 µm.

7. Corps composite selon l'une des revendications précédentes, **caractérisé en ce que** les fibres de renforcement de la seconde et/ou de la troisième zone sont formées par des fibres résistantes aux hautes températures à base de carbone, silicium, bore, azote, tungstène, aluminium ou leurs combinaisons.

8. Corps composite selon la revendication 7, **caractérisé en ce que** les fibres de renforcement présentent une enduction de carbone, de graphite ou de carbures.

9. Corps composite selon l'une des revendications précédentes, **caractérisé en ce que** la seconde zone contient des matières de remplissage en silicides, carbures, borures, nitrures, métaux et/ou des mélanges de ceux-ci.

10. Corps composite selon l'une des revendications précédentes, **caractérisé en ce que** le pourcentage en masse du matériau de remplissage dans la seconde zone constitue jusqu'à environ 50 % par rapport à la masse du mélange de départ pour la seconde zone.

11. Corps composite selon l'une des revendications précédentes, **caractérisé en ce que** la première zone est constituée par une céramique composite avec un pourcentage en SiC supérieur à 50 % en poids qui a été formée par une infiltration liquide de silicium dans un premier corps contenant du carbone.

12. Corps composite selon la revendication 11, **caractérisé en ce que** le premier corps contenant du carbone est constitué de manière prépondérante par du feutre de carbone, du graphite, du matériau à base de graphite et/ou du charbon.

13. Corps comopsite selon l'une des revendications précédentes, **caractérisé en ce que** la première zone contient des matières de remplissage du groupe N, B, Al, C, Si, Ti, Zr, W, élementaires ou en combinaison, en particulier TiC, TiSiₓ, TiBₓ, TiC, WC, B₄C, SiC, BN, des céramiques au Si₃N₄ et SiCBN dans des pourcentages en masse de 20 à 50 %.

14. Corps composite selon l'une des revendications 1 à 13, **caractérisé en ce que** le rapport des épaisseurs de la première et de la seconde zone ou encore de la première, de la seconde et de la troisième zone est de l'ordre de 1:2 à 2:1, ou encore de 1:2:2 à 2:1:1.

15. Corps composite selon l'une des revendications 1 à 13, **caractérisé en ce que** l'épaisseur de la première aussi bien que de la seconde zone est de l'ordre d'1 à 100 mm.

16. Corps composite selon la revendication 2, **caractérisé en ce que** le renforcement en fibres longues est formé par des fibres, tissus, pliages ou tricots à enduction simple ou multiple dont les fibres sont orientées de manière prépondérante à l'intérieur du plan perpendiculairement à la structure de la couche.

17. Corps composite selon la revendication 2 ou 16, **caractérisé en ce que** la longueur moyenne des fibres de la troisième zone est supérieure à 50 mm.

18. Corps composite selon l'une des revendications 1 à 17, **caractérisé en ce que** la première zone présente des joints de détente.

19. Procédé pour la production d'un corps composite renforcé par des fibres selon l'une des revendications 1 à 18, **caractérisé par** la préparation de premiers corps poreux contenant du carbone pour la première et la seconde zone, la superposition des premiers corps de la première et de la seconde zone, la fixation mécanique du composite résultant et infiltration commune ultérieure de la première et de la seconde zone avec du silicium liquide et réalisation de l'enrichissement en silicium de manière habituelle.

20. Procédé selon la revendication 18, **caractérisé en ce qu'**avant infiltration un troisième et éventuellement d'autres premiers corps poreux contenant du carbone sont appliqués sur le composite et fixés mécaniquement et qu'ensuite une infiltration commune de toutes les zones avec du silicium liquide et l'enrichissement en silicium a lieu.

21. Procédé selon la revendication 20, **caractérisé en ce qu'**un composite est fabriqué à partir de la première et de la seconde zone qui est ensuite infiltré avec du silicium liquide et enrichi en silicium et qu'ensuite en plus un matériau pour une troisième zone est appliqué et est collé au composite.

22. Procédé selon l'une des revendications 19 à 21, **caractérisé en ce que** la fixation mécanique est provoquée par une colle pyrolisable.

23. Procédé selon l'une des revendications 19 à 22, **caractérisé en ce que** pour l'infiltration et l'enrichissement en silicium le silicium est appliqué sur au moins une surface extérieure du composite sous forme de poudre et est réchauffé à une température supérieure au point de fusion du silicium.

24. Utilisation d'un corps composite renforcé par des fibres selon l'une des revendications 1 à 18 pour l'absorption partielle ou complète d'au moins une sollicitation ponctuelle du type secousse.

25. Utilisation selon la revendication 4 pour le blindage.

26. Utilisation selon les revendications 24 ou 25 comme composant de structure.

27. Utilisation selon l'une des revendications 24 à 26 pour le blindage en construction automobile et en construction aéronautique.

28. Utilisation selon l'une des revendications 24 à 27 pour le blindage de chars blindés, avions, hélicoptères, navires, véhicules ferroviaires, bâtiments et coffres-forts.

29. Utilisation selon l'une des revendications 24 à 26 dans des vestes de protection.
